## Europäisches Patentamt
## European Patent Office
## Office européen des brevets

(19)

(11) Publication number: **0 016 583**
**B1**

(12)

# EUROPEAN PATENT SPECIFICATION

(45) Date of publication of patent specification: **12.10.83**

(51) Int. Cl.³: **C 01 G 23/07, C 09 C 1/36**

(21) Application number: **80300672.5**

(22) Date of filing: **05.03.80**

(54) **Process for producing rutile TiO2 by oxidation of TiCl4 in the presence of PCl3 and AlCl3 and titanium dioxide pigment obtained by this process.**

(30) Priority: **05.03.79 US 17342**

(43) Date of publication of application:
**01.10.80 Bulletin 80/20**

(45) Publication of the grant of the patent:
**12.10.83 Bulletin 83/41**

(84) Designated Contracting States:
**BE DE FR GB IT**

(56) References cited:
**DE - A - 1 717 193**
**DE - A - 2 231 503**
**US - A - 2 791 490**
**US - A - 3 505 091**
**US - A - 3 547 671**
**US - A - 3 856 929**
**US - A - 3 926 660**

(73) Proprietor: **E.I. DU PONT DE NEMOURS AND COMPANY**
**Legal Department 1007 Market Street**
**Wilmington Delaware 19898 (US)**

(72) Inventor: **Glaeser, Hans Hellmut**
**11 Meadows Lane**
**Wilmington, Delaware 19807 (US)**

(74) Representative: **Woodcraft, David Charles et al,**
**BROOKES & MARTIN High Holborn House 52/54**
**High Holborn**
**London, WC1V 6SE (GB)**

Courier Press, Leamington Spa, England.

# Process for producing rutile $TiO_2$ by oxidation of $TiCl_4$ in the presence of $PCl_3$ and $AlCl_3$

The present invention relates to a process for preparing titanium dioxide from titanium tetrachloride, aluminum trichloride and phosphorous trichloride by oxidation. More specifically, the process of the present invention relates to preparing titanium dioxide by oxidation of titanium tetrachloride in the presence of aluminum chloride followed by the addition of phosphorous trichloride when the conversion to titanium dioxide is at least 80%.

It is disclosed in U.S. Patent 3,547,671 that titanium tetrachloride can be oxidized in the presence of aluminum trichloride and phosphorous trichloride to give rutile titanium dioxide. The amount of $AlCl_3$ was sufficient to form 2—4% $Al_2O_3$ and the amount of $PCl_3$ was sufficient to form from 0.5—3% $P_2O_5$ based on the weight of $TiO_2$ pigment formed. It is also disclosed that rutilization is impeded by $PCl_3$ but that the effect of $PCl_3$ may be compensated for by increasing the $AlCl_3$.

Now a process has been found for preparing titanium dioxide substantially in the rutile form. The present invention provides for obtaining a higher rutile $TiO_2$ at any given level of $AlCl_3$ within the scope of the invention as compared to simultaneous addition of $AlCl_3$ and $PCl_3$ at one point in the reaction. The process of this invention comprises the oxidation of $TiCl_4$, in the presence of $AlCl_3$, with the later introduction into the oxidation of $PCl_3$, when at least 80% of the $TiCl_4$ is converted to $TiO_2$.

According to the present invention, there is provided a process for the manufacture of $TiO_2$ essentially in the rutile form by reacting $TiCl_4$ and oxygen or an oxygen containing gas in a reaction chamber in the presence of $AlCl_3$ and $PCl_3$ characterised in that the $AlCl_3$ and $PCl_3$ are separately introduced in an amount which is such as to provide from 0.1 to 0.5% by weight $P_2O_5$ and from 0.1 to 1.5% by weight $Al_2O_3$, calculated on the weight of the final $TiO_2$ pigment and in that the $PCl_3$ is added after the $AlCl_3$ addition and at a stage in the process where $TiCl_4$ is at least 80% converted to $TiO_2$.

The oxidation is conducted in the presence of oxygen or a gas containing oxygen. The oxygen or gas containing oxygen is in general preheated to a temperature of 800—1600°C and then is normally introduced into a reaction chamber of a metal pipeline-type reactor. The temperature in the reactor of the combined oxidizing gas stream and $TiCl_4/AlCl_3$ can range rather widely. Generally, the temperature ranges from 1000—1500°C.

Aluminum trichloride is in practice added with the titanium tetrachloride in such a manner that the aluminum trichloride and titanium tetrachloride are uniformly distributed into the reactor space so that more efficient contact with preheated oxygen occurs. The aluminum trichloride and titanium tetrachloride may be mixed and then sprayed concentrically in the vapor state into the reactor. Rapid, efficient mixing of the $TiCl_4/AlCl_3$ can be accomplished by the use of an annular ring with outlets and side tee mixing, as taught in U.S. Patent 2,791,490, and this is preferred.

An amount of aluminum trichloride can be added which is sufficient to form 0.1—1.5% $Al_2O_3$ based on the $TiO_2$ pigment. Amounts of $AlCl_3$ that will form less than 0.1% will give optical values for the product $TiO_2$ that are lower to the point of making a less efficient pigment. Amounts of $AlCl_3$ that will form more than 1.5% $Al_2O_3$ can be used with no advantage. Minimization of the $AlCl_3$ reduces corrosion of the metallic reactor. However, $AlCl_3$ is essential in the formation of rutile $TiO_2$. Corrosion of the metallic reactor that results with oxidation in the presence of $AlCl_3$, $PCl_3$, $TiCl_4$ is greatly reduced by the present invention.

Phosphorous trichloride is added to the reactor at a point in the oxidation reaction where at least 80%, preferably 88—98%, more preferably 90—94%, of the $TiCl_4$ introduced into the reactor has been converted to $TiO_2$. In a pipeline-type reactor, the addition point of $PCl_3$ will vary depending on the size of the reactor and the particular target conversion level. For example in the case of a 10-inch (254 mm) inside diameter tubular reactor with oxygen at 980°C and operating at a rate of 7830 kg of oxygen per hour with sufficient $Al_2O_3$ to provide 1% $Al_2O_3$ in the $TiO_2$ it was determined that at a point 5 feet (1.52 metre) from the entrance of the $TiCl_4$ a conversion of 92% of the $TiCl_4$ to $TiO_2$ had occurred so that $PCl_3$ addition conveniently could be effected at this point.

The reaction initiated is an exothermic type. Therefore, the temperature in the reactor is generally at least 800°C and in general ranges from 800—1500°C and preferably 1100—1500°C. The addition of the $PCl_3$ after the achievement of at least 80% conversion to $TiO_2$, results in the need for less $AlCl_3$ to achieve the levels of rutilization achieved by this invention. Thus, the present invention offers better control of rutilization. The percent rutile in the product $TiO_2$ achieved by this invention is generally from 85—100%, preferably 92—100% and most preferably 98—100%. The present process can produce more rutile at a given level of $AlCl_3$ than does the process where the addition of $AlCl_3$ and $PCl_3$ take place at the same point in the reaction. Percent rutile is determined by X-ray diffraction as is well known in the art.

Thus, the present invention enables better control of rutilization and reduced corrosion of the metallic reactor through reduced levels of $AlCl_3$ with the capability of achieving essentially complete rutilization. What is meant by essentially complete rutilization is 98—100%.

The amount of $PCl_3$ that is added in the process of this invention is sufficient to form 0.1—0.5% $P_2O_5$, preferably 0.1—0.3% $P_2O_5$ in the $TiO_2$. Amounts of $PCl_3$ that will form less than 0.1% $P_2O_5$ result in lower optical values for the $TiO_2$. Amounts of $PCl_3$ that will form more than 0.5% $P_2O_5$ give no

advantage. When $PCl_3$ is added with $AlCl_3$ and $TiCl_4$, the rutilization, among other things, is effected. More $AlCl_3$ is therefore required. However, when $PCl_3$ is added after the $TiCl_4/AlCl_3$ addition and after at least 80% of the $TiCl_4$ is converted to $TiO_2$, the $PCl_3$ does not substantially affect the rutilization and therefore less $AlCl_3$ is required to achieve a given rutilization.

The process of this invention also results in a reduction in the viscosity of a slurry of the $TiO_2$ in the processing of the $TiO_2$ product. The $TiO_2$ resulting from the oxidation reaction of this invention is in a semi-finished state. In order to prepare the $TiO_2$ for use in paper and board applications, a slurry is prepared as is illustrated in Example 3 below. In paint and plastics use the $TiO_2$ is wet treated, washed and milled to a dry powder.

Examples

In the examples that follow all percentages and parts are by weight unless otherwise indicated.

Example 1—(best mode)

A stream of oxygen preheated to a temperature of 980°C was introduced into one end of a 10-inch (254 mm) inside diameter tubular, chlorine-purged reactor operated at 1.76 kg/cm² (280.6 kPa) gauge at a rate of 7730 kg per hour.

A titanium tetrachloride stream containing sufficient aluminum trichloride to provide one percent $Al_2O_3$ in the titanium dioxide based on the titanium dioxide was preheated to 480°C and introduced into the reactor in vapor form through an annular ring and mixing tee to ensure complete and uniform mixing with the preheated oxygen.

The temperature of the reaction gas stream was 1300—1450°C after the addition of the titanium tetrachloride and aluminum trichloride is complete. $PCl_3$ is then added at a point where 92% of the $TiCl_4$ was converted to $TiO_2$ through a similar annular ring in sufficient quantity to provide 0.25% $P_2O_5$ on the titanium dioxide. The $PCl_3$ addition was followed by scrub solids before the reaction stream exited the reactor into cooling ducts. The reaction stream with the scrub solids was cooled. The reaction produced pigmentary size 100% rutile $TiO_2$.

Scrub solids are rutile $TiO_2$ of granular 20—40 mesh, 420 to 850 $\mu$m (U.S.S.) size that has been calcined and was used to clean the walls of the reactor.

Comparative Example A

Rutile $TiO_2$ was prepared by the process of Example 1 except that sufficient $AlCl_3$ was added to form 1% $Al_2O_3$ in the $TiO_2$ and no $PCl_3$ was added.

Comparative Example B

Rutile $TiO_2$ was prepared by the process of Example 1 except that $PCl_3$ was added with the $TiCl_4$ and $AlCl_3$ and the amount of $AlCl_3$ and $PCl_3$ was sufficient to form 1% $Al_2O_3$ and 0.25% $P_2O_5$ respectively in the $TiO_2$.

Comparative Example C

Rutile $TiO_2$ was prepared by the process of Example 1 except that sufficient $AlCl_3$ was added to form 1.5% $Al_2O_3$ and sufficient $PCl_3$ was added with the $AlCl_3$ to form 0.25% $P_2O_5$.

Example 2

Rutile $TiO_2$ was prepared by the process of Example 1 except that sufficient $AlCl_3$ and $PCl_3$ was added to form 1% $Al_2O_3$ and 0.57% $P_2O_5$ respectively.

Example 3

The $TiO_2$ prepared by Examples 1 and 2 and Comparative Examples A, B and C was made into a rutile pigment slurry by the process described below and the data obtained is shown in the table that follows:

682 kg of $H_2O$ were added to a grind tank. Add 10.9 kg of powdered tetrapotassium pyrophosphate and 16.4 kg of liquid 2-amino-2-methyl-1-propanol (AMP) were added to the $H_2O$ and stirred until dissolved. 2730 kg of $TiO_2$ prepared as described above were added over a period of 20 minutes to form a slurry. The slurry (80% solids) was ground for 30 minutes. The slurry contents were diluted to ~72% by adding 409 kg of $H_2O$. The slurry was screened to remove grit. Samples were evaluated for optical value (blue green brightness) in a typical board coating formula.

## 0 016 583

### Board coating evaluation

| Example no. | % solids | Rutile | Viscosity | Optical value | |
|---|---|---|---|---|---|
| | | | | Blue | Green |
| Comparative Example A | 72.5 | 99 | 1200 | 85 | 85 |
| Comparative Example B | 72.4 | 95 | 600 | 102 | 102 |
| Comparative Example C | 72.5 | 98—99 | 600 | 103 | 101 |
| 1 | 71.9 | 99 | 630 | 102 | 101 |
| 2 | 72.2 | 99 | 460 | 99 | 97 |

Example 4

Evaluation in enamel grade pigment

The process described in Example 1 was followed except that sufficient $PCl_3$ and $AlCl_3$ was added to form the percent $P_2O_5$ and percent $Al_2O_3$ shown below to prepare $TiO_2$. From this process, 4000 grams of pigment was placed in 10 liters of water and the slurry that resulted was heated to 60°C. Fifty percent NaOH was added to bring the pH to 9.0. Three hundred and twenty cc of a sodium aluminate solution (375 g $Al_2O_3$/liter) and enough 20% HCl solution to maintain the pH at 9.0 was added. The pH was adjusted to 8.2 with 20% HCl. The slurry was digested for 30 minutes at 60°C, filtered, washed until the resistance of a standard sample was 7000 ohms and dried at 140°C for 48 hours. The dry powder was divided into four equal parts and ground in a fluid energy mill at rates of 350 g/min, 650 g/min, 1100 g/min and 2200 g/min. The pigment samples are evaluated in a high gloss alkyd enamel.

### Alkyd enamel evaluation

| Sample | Rate | Gloss |
|---|---|---|
| Enamel grade | 650 g/min | 79 |
| 0.25% $P_2O_5$ | 1100 g/min | 79 |
| 1.0% $Al_2O_3$ | 2200 g/min | 75 |
| Enamel grade | 650 g/min | 79 |
| 0.46% $P_2O_5$ | 1100 g/min | 78 |
| 1.0% $Al_2O_3$ | 2200 g/min | 77 |

Example 5

Evaluation in plastic grade

The process of Example 1 was followed except that sufficient $PCl_3$ and $AlCl_3$ was added to form the $P_2O_5$ and $Al_2O_3$ shown below to prepare $TiO_2$. Four thousand grams of this $TiO_2$ pigment were dispersed in 2000 ml of $H_2O$ and diluted to 10,000 ml of solution by adding $H_2O$. The contents were stirred and heated to 60°C. Thirty-eight ml of a sodium aluminate solution were added. (341 g $Al_2O_3$/liter.) The pH was adjusted to 8.0 with hydrochloric acid. The mixture was cured at 60°C for 1/2 hour, filtered, washed to 7000 ohms and dried about 48 hours at 140°C. It was then screened through a 10 mesh screen and treated with a grinding aid and ground in a fluid energy mill.

Samples were also prepared by scaling the laboratory procedure that follows up to 50 tons. Samples were evaluated in polyethylene dispersed in the conventional manner.

### Polyethylene evaluation

| | Brightness | Yellow index |
|---|---|---|
| Lab sample 0.25% $P_2O_5$, 1% $Al_2O_3$ | 93.8 | 3.3 |
| Plant sample 0.25% $P_2O_5$, 1% $Al_2O_3$ | 94.6 | 3.0 |
| Plant sample 0.25% $P_2O_5$, 1% $Al_2O_3$ | 94.7 | 2.7 |

Example 6

Evaluation in emulsion flat grades

The procedure of Example 1 was followed except that sufficient $PCl_3$ and $AlCl_3$ was added to form the percent $P_2O_5$ and percent $Al_2O_3$ shown below to prepare $TiO_2$.

Three thousand grams of this $TiO_2$ was placed in 10 liters of water and the slurry that resulted was heated to 70°C and 30 ml of a 20% hydrochloric acid added. Five hundred and thirty-eight ml of a sodium silicate solution (390 g $SiO_2$/liter) were added while maintaining the pH below 7.0 with 20% hydrochloric acid. The pH was adjusted to 7.5—8.0 with 50% NaOH solution. The slurry was digested

4

at 70°C for 1/2 hour. Five hundred cc of a sodium aluminate solution (360 g $Al_2O_3$/liter) were added while holding the pH between 7.5 and 8.0 with 20% hydrochloric acid. The slurry was digested at 70°C for 1/2 hour, filtered, washed to 7000 ohms and dried at 140°C for 48 hours. It was then ground in a fluid energy mill. The samples were evaluated in interior emulsion flat paints.

### Evaluation
### Emulsion flat hiding

| Sample | Interior emulsion test formula 0.3 kg $TiO_2$/kg 48 PVC | | | Interior emulsion test formula 0.2 kg $TiO_2$/kg 55 PVC | | |
|---|---|---|---|---|---|---|
| | HP | HPO | Stain | HP | HPO | Stain |
| Flat emulsion grade lab produced 0.25% $P_2O_5$ 1.00% $Al_2O_3$ | 120 | 63.0 | cons⁻ | 112 | 65 | vvsl⁻ |

The symbols in the Table have the following significance:— HP=hiding power (dry or flat), HPO=hiding power oiled, vvsl⁻=very slightly poorer and cons⁻=considerably poorer.

Industrial applicability

The process of this invention produces an essentially 100% rutile $TiO_2$ with less metallic corrosion in the oxidation reactor than when $PCl_3$ is added with $TiCl_4$ and $AlCl_3$. The 100% rutile $TiO_2$ made into a slurry for paper or board application displays superior optical values and lower slurry viscosities. The 100% rutile $TiO_2$ from oxidation is wet treated, filtered, washed, dried and fluid energy milled to form a dry $TiO_2$ for plastics pigmentation and for paints.

**Claims**

1. A process for the manufacture of $TiO_2$ essentially in the rutile form by reacting $TiCl_4$ and oxygen or an oxygen containing gas in a reaction chamber in the presence of $AlCl_3$ and $PCl_3$ characterised in that the $AlCl_3$ and $PCl_3$ are separately introduced in an amount which is such as to provide from 0.1 to 0.5% by weight $P_2O_5$ and from 0.1 to 1.5% by weight $Al_2O_3$, calculated on the weight of the final $TiO_2$ pigment and in that the $PCl_3$ is added after the $AlCl_3$ addition and at a stage in the process where $TiCl_4$ is at least 80% converted to $TiO_2$.

2. A process for preparing titanium dioxide in essentially rutile form wherein titanium tetrachloride is reacted with oxygen in a reaction chamber characterised in that the reaction is effected in the presence of sufficient aluminum trichloride to provide from 0.1% to 1.5% by weight $Al_2O_3$ in the titanium dioxide and in the presence of sufficient $PCl_3$ to provide from 0.1% to 0.5% by weight $P_2O_5$ in the titanium dioxide, the $PCl_3$ being introduced into the reaction chamber so as to contact the reaction mixture subsequent to contact thereof with aluminum trichloride and so that the reaction mixture with which it is brought into contact has undergone at least 80% by weight conversion of titanium tetrachloride to titanium dioxide.

3. A process for preparing titanium dioxide in essentially rutile form wherein a mixture of titanium tetrachloride and aluminum trichloride is introduced into a tubular reactor, characterised in that the mixture contains said aluminum trichloride in an amount sufficient to provide from 0.1% to 1.5% by weight $Al_2O_3$ in the rutile product, said mixture is subjected to oxidation reaction with oxygen whilst displacing said mixture axially further from the point of introduction thereof to the reactor, $PCl_3$ is introduced into the reactor at a point downstream of said point of introduction at which at least 80% by weight titanium tetrachloride has been converted, the amount of $PCl_3$ introduced being such as to provide from 0.1% to 0.5% by weight $P_2O_5$ in the rutile product and further oxidation of titanium tetrachloride is effected in the presence of said $PCl_3$.

4. A process as claimed in any one of Claims 1 to 3 wherein the oxygen is in the form of essentially pure oxygen or a gas containing free molecular oxygen.

5. A process as claimed in any preceding claim wherein the amount of $PCl_3$ is sufficient to form 0.1 to 0.3% by weight $P_2O_5$.

6. A process as claimed in any preceding claim wherein the $TiCl_4$ is 88 to 98 wt.% converted to $TiO_2$ at the point of $PCl_3$ introduction.

7. A process as claimed in Claim 6 wherein the $TiCl_4$ is 90 to 94 wt.% converted to $TiO_2$.

8. Titanium dioxide pigment in which at least 99% is in the rutile form and which contains 0.1 to 0.3% by weight $P_2O_5$ and 0.1 to 1.5% $Al_2O_3$, said pigment having been produced by the process claimed in any one of the preceding claims.

**Patentansprüche**

1. Verfahren zur Herstellung von $TiO_2$ in im wesentlichen Rutilform, wobei $TiCl_4$ und Sauerstoff oder ein sauerstoffhaltiges Gas in Gegenwart von $AlCl_3$ und $PCl_3$ in einer Reaktionskammer reagieren, dadurch gekennzeichnet, dass $AlCl_3$ und $PCl_3$ getrennt in einem Betrag, der 0.1 bis 0.5 Gew.-% $P_2O_5$ und 0.1 bis 1.5 Gew.-% $Al_2O_3$, bezogen auf das Gewicht des endlichen $TiO_2$—Pigment, versieht, eingeleitet werden, und dass nach dem $AlCl_3$-Zusatz und bei einer Verfahrenstufe worin sich mindestens 80% des $TiCl_4$ in $TiO_2$ umgewandelt $PCl_3$ zugesetzt wird.

2. Verfahren zur Vorbereitung von Titandioxyd, in im wesentlichen Rutilform, wobei man Tetrachlortitan mit Sauerstoff in einer Reaktionskammer reagieren lässt, dadurch gekennzeichnet, dass die Reaktion in Gegenwart von Trichloraluminium stattfindet das anwesend in einem Betrag ist der gross genug ist um 0.1 bis 0.5 Gew.-% $P_2O_5$ im Titandioxyd vorzusehen, wobei $PCl_3$ in die Reaktionkammer eigeleitet wird so dass wenn mindestens eine 80 Gew.-% Umwandlung von Tetrachlortitan in Titandioxyd stattgefunden hat, wird $PCl_3$ mit dem Reaktionsgemisch kontaktiert.

3. Verfahren zur Vorbereitung von Titandioxyd in im wesentlichen Rutilform, wobei ein Tetrachlortitan-Aluminiumtrichlorid-Gemisch in ein röhrenförmiges Reaktionsgefäss eingeleitet wird, dadurch gekennzeichnet, dass das Gemisch einen Aluminiumtrichlord-Gehalt aufweist der gross genug ist um 0.1 bis 1.5 Gew.-% $Al_2O_3$ im Rutilprodukt vorzusehen, dass das genannte Gemisch, während seiner weiteren achsialen Entfernung von dem Punkt wo es in das Reaktionsefäss eingeleitet wird, mit Sauerstoff oxydiert ist, dass, an einer Stelle hinter dem gegannten Einleitungspunkt wo mindestens 80 Gew.-% Tetrachlortitan umgewandelt wurde, $PCl_3$ in das Reaktionsgefäss eingeleitet wird, wobei der eingeleitete $PCl_3$-Betrag zur Versehung von 0.1 bis 0.5 Gew-% $P_2O_5$ im Rutilprodukt genügt, und dass weitere Oxydation des Tetrachlortitans in Gegenwart des genannten $PCl_3$ stattfindet.

4. Verfahren nach einem der Ansprüche 1 bis 3, wobei der Sauerstoff als im wesentlichen reiner Sauerstoff oder als ein Gas mit freiem Molekularsauerstoff anwesend ist.

5. Verfahren nach einem der vorangehenden Ansprüche wobei der $PCl_3$-Gehalt zur Formung von 0.1 bis 0.3 Gew.-% $P_2O_5$ gegügt.

6. Verfahren nach einem der vorangehenden Ansprüche wobei am Einleitungspunkt des $PCl_3$ 88 bis 98 Gew.-% $TiCl_4$ in $TiO_2$ umgewandelt wird.

7. Verfahren nach Anspruch 6, wobei 90 bis 94 Gew.-% $TiCl_4$ in $TiO_2$ umgewandelt wird.

8. Titandioxyd-Pigment in dem mindestens 90% in Rutilform ist und das 0.1 bis 0.3 Gew.-% $P_2O_5$ und 0.1 bis 1.5% $Al_2O_3$ enthält, welches Pigment nach dem Verfahren nach einem der vorangehenden Ansprüche hergestellt worden ist.

**Revendications**

1. Procédé pour la production de $TiO_2$, essentiellement en forme rutile, par la réaction de $TiCl_4$ et de l'oxygène, ou d'un gaz contenant de l'oxygène dans une enceinte de réaction en presence d'$AlCl_3$ et de $PCl_3$, caractérisé en ce que l'$AlCl_3$ et le $PCl_3$ sont introduits séparément en une quantite telle qu'elle fournit 0,1 à 0,5% par poids $P_2O_5$ et 1,0 à 1,5% par poids $Al_2O_3$, basé sur le poids du pigment $Al_2O_3$ finalement obtenu, et en ce qu'on ajoute le $PCl_3$ après avoir ajouté l'$AlCl_3$ et à un etage du procédé où au moins 80% du $TiCl_4$ est converti en $TiO_2$.

2. Procédé pour la préparation du dioxyde de titane essentiellement en form rutile, dans lequel procédé on fait reagir du tétrachlorure de titane avec de l'oxygène dans une enceinte de réaction, caractérisé en ce que la réaction a lieu en presence d'une quantité de trichlorure d'aluminium telle qu'elle fournit 0,1 à 1,5% par poids $Al_2O_3$ dans le dioxyde de titane, et en presence d'une quantité de $PCl_3$ telle qu'elle fournit 0,1 à 0,5% par poids $P_2O_5$ dans le dioxyde de titane, le $PCl_3$ étant introduit dans l'enceinte de réaction afin de contacter le mélange reactionnel après que le mélange a été contacté par le trichlorure d'aluminium et afin d'amener le $PCl_3$ en contact avec le mélange réactionnel quand au moins 80% par poids de tétrachlorure de titane a été converti en dioxyde de titane.

3. Procédé pour la préparation du dioxyde de titane essentiellement en forme rutile, dans lequel procédé un mélange de tétrachlorure de titane et trichlorure d'aluminium est introduit dans une enceinte de réaction tubulaire, lequel procédé est caractérisé en ce que le mélange comprend une quantité de trichlorure d'aluminium telle qu'elle fournit 0,1% à 1,5% par poids $Al_2O_3$ dans le produit rutile, en ce que ledit mélange subit une réaction oxydante par de l'oxygène pendant le déplacement axial dudit mélange à partir du lieu où il est introduit dans l'enceinte de réaction, en ce que du $PCl_3$ est introduit dans l'enceinte à un lieu qui se trouve en aval dudit lieu d'introduction où au moins 80% par poids de tétrachlorure de titane a été converti, et en ce que la quantité de $PCl_3$ qu'on a introduite est telle qu'on obtient 0,1 à 0,5% par poids de $P_2O_5$ dans le produit rutile et que l'oxydation additionnelle du tétrachlorure de titane a lieu en présence dudit $PCl_3$.

4. Procédé selon l'une des revendications 1 à 3, dans lequel l'oxygène est formé par de l'oxygène essentiellement pur ou par un gaz qui contient de l'oxygène moléculaire libre.

5. Procédé selon l'une des revendications précédentes, dans lequel la quantité de $PCl_3$ suffit à former 0,1 à 0,3% par poids de $P_2O_5$.

6. Procédé selon l'une des revendications précédentes, dans lequel 88 à 98% par poids du $TiCl_4$ est converti en $TiO_2$ au lieu où on introduit le $PCl_3$.

7. Procédé selon la revendication 6, dans lequel 90 à 94% par poids du $TiCl_4$ est converti en $TiO_2$.

8. Pigment en dioxyde de titane dans lequel au moins 99% est en forme rutile et qui comprend 0,1 à 0,3% par poids de $P_2O_5$ et 0,1 à 1,5% par poids d'$Al_2O_3$, lequel pigment a été produit par le procédé selon l'une des revendications précédentes.